# EUROPEAN PATENT APPLICATION

(11) **EP 2 866 195 A1**
(43) Date of publication of application: **29.04.2015**
(21) Application number: 13810312.2
(22) Date of filing: 17.06.2013
(51) Int. Cl.: G06T 7/00, G06T 1/00, G06T 7/60

(54) **IMAGE PROCESSING DEVICE, IMAGE PROCESSING METHOD, AND IMAGE PROCESSING PROGRAM**

(30) Priority: 26.06.2012 JP 2012142969
(71) Applicant: Konica Minolta, Inc., Tokyo 100-7015 (JP)
(72) Inventor: SUMITOMO, Hironori, Tokyo 100-7015 (JP)
(74) Representative: Hoffmann Eitle
(86) International application number: PCT/JP2013/066586
(87) International publication number: WO 2014/002813

(57) **Abstract**

An image processing apparatus acquires at least first and second input images corresponding to the input image and having a first resolution and a second resolution higher than the first resolution, respectively, acquires first and second reference images corresponding to the reference image and having resolutions corresponding to the first and second resolutions, respectively, calculates a relative displacement of rotation and/or scale between the first input image and the first reference image through a search process between the first input image and the first reference image, corrects the first reference image based on the relative displacement to generate a first corrected reference image, determines a corresponding position in the first resolution through a search process between the first input image and the first corrected reference image, and determines a corresponding position in the second resolution by performing a search process between the second input image and the second reference image, using the relative displacement, with reference to a position in the second input image that is equivalent to the corresponding position in the first resolution.

## Description

### TECHNICAL FIELD

The present invention relates to an image processing apparatus, an image processing method, and an image processing program for searching an input image for a region corresponding to a reference image.

### BACKGROUND ART

A variety of techniques for a search process (matching process) between two images have conventionally been proposed. For example, Phase-Only Correlation (POC) is often used when a pair of images of the same subject are acquired using a stereo camera and a corresponding point between these images is searched for. In this POC method, a corresponding point between images is searched for using phase difference information of spatial frequency included in the images.

Since general stereo cameras are designed such that the rotation around the optical axis and the magnification are basically identical, a reference position can be searched for using the POC method in such a stereo corresponding point search. On the other hand, when the rotation around the optical axis and/or the magnification differ, an extended technique of the POC method can be used to search for size and/or rotation amount in addition to a reference position. Examples of the extended technique of the POC method include POC methods adapted for size and/or rotation, such as Rotation Invariant Phase-Only Correlation (RIPOC).

Japanese Laid-Open Patent Publication No. 10-124667 (PTD 1) discloses a pattern matching device using the RIPOC method. This pattern matching device performs matching of N-dimensional patterns (for example, fingerprints (two-dimensional), solids (three-dimensional)) based on spatial frequency characteristics and aims to enable identification as to whether a registered pattern is identical with the matched pattern even when a rotation displacement exists. NPD 1 shows an example of the size/rotation-adapted POC method. More specifically, NPD 1 discusses a POC method using Fourier-Mellin Transforms.

The POC method and the size/rotation-adapted POC method are advantageous in that robust position detection is enabled because of the use of phase difference information of spatial frequency included in images but are disadvantageous in that the processing volume is considerably large and the operation takes time. For example, in a case where a matching process for searching for a position having a particular pattern (reference image/template image) included in an input image is performed using the size/rotation-adapted POC method, raster scan is required for the position search and the operation time required therefor may be enormous.

Japanese Laid-Open Patent Publication No. 2005-235089 (PTD 2) discloses a matching process with the efficiency increased by using multi-resolution images. More specifically, PTD 2 discloses an image recognition apparatus that achieves much higher efficiency by thinning out matching candidates used in a search on the coarse resolution level and, in addition, significantly reduces a search time and at the same time enable correct matching by reconstructing a new search region with detailed vectors in order to prevent omission of candidates due to the thinning.

### CITATION LIST

### PATENT DOCUMENT

PTD 1: Japanese Laid-Open Patent Publication No. 10-124667
PTD 2: Japanese Laid-Open Patent Publication No. 2005-235089

### NON PATENT DOCUMENT

NPD 1: Qin-Sheng Chen, "Symmetric Phase-Only Matched Filtering of Fourier-Mellin Transforms for Image Registration and Recognition", IEEE TRANSACTIONS ON PATTERN ANALYSIS AND MACHINE INTELLIGENCE, VOL. I6, NO. 12, DECEMBER 1994

### SUMMARY OF INVENTION

### TECHNICAL PROBLEM

Although the method for speeding up the matching process has been proposed as described above, it has not been easy to perform a matching process at high speed, for example, when there is a relative displacement of rotation and/or scale between the input image and the reference image.

An object of the present invention is to provide a new image processing apparatus, image processing method and image processing program for searching an input image for a region corresponding to a reference image at higher speed.

### SOLUTION TO PROBLEM

An embodiment of the present invention provides an image processing apparatus for searching an input image for a region corresponding to a reference image. The image processing apparatus includes: an input image acquisition unit that acquires at least first and second input images corresponding to the input image and having a first resolution and a second resolution higher than the first resolution, respectively; a reference image acquisition unit that acquires first and second reference images corresponding to the reference image and having resolutions corresponding to the first and second resolutions, respectively; a first corresponding position determining unit that calculates a relative displacement of rotation and/or scale between the first input image and the first reference image through a search process between the first input image and the first reference image, corrects the first reference image based on the calculated relative displacement to generate a first corrected reference image, and determines a corresponding position in the first resolution through a search process between the first input image and the first corrected reference image; and a second corresponding position determining unit that determines a corresponding position in the second resolution by performing a search process between the second input image and the second reference image, using the relative displacement calculated by the first corresponding position determining unit, with reference to a position in the second input image that is equivalent to the corresponding position in the first resolution.

Preferably, the second corresponding position determining unit calculates a relative displacement of rotation and/or scale between the second input image and the second reference image by performing a search process between the second input image and the second reference image with limitation on a search range in accordance with the relative displacement between the first input image and the first reference image, corrects the second reference image based on the calculated relative displacement to generate a second corrected reference image, and determines a corresponding position in the second resolution through a search process between the second input image and the second corrected reference image.

Further preferably, the second corresponding position determining unit allows the reference image acquisition unit to generate the second reference image in accordance with the relative displacement between the first input image and the first reference image.

Further preferably, the second corresponding position determining unit calculates the relative displacement of rotation and/or scale between the second input image and the second reference image by performing a search process between the second input image and the second reference image, corrects the second reference image based on the calculated relative displacement to generate the second corrected reference image, and determines a corresponding position in the second resolution through the search process between the second input image and the second corrected reference image.

Preferably, the image processing apparatus further includes a control unit that changes a method of determining a corresponding position in the second resolution by the second corresponding position determining unit, based on at least one of: similarity calculated in the search process between the first input image and the first reference image; and similarity calculated in the search process between the first input image and the first corrected reference image.

Another embodiment of the present invention provides an image processing method for searching an input image for a region corresponding to a reference image. The image processing method includes the steps of: acquiring at least first and second input images corresponding to the input image and having a first resolution and a second resolution higher than the first resolution, respectively; acquiring first and second reference images corresponding to the reference image and having resolutions corresponding to the first and second resolutions, respectively; calculating a relative displacement of rotation and/or scale between the first input image and the first reference image through a search process between the first input image and the first reference image, correcting the first reference image based on the calculated relative displacement to generate a first corrected reference image, and determining a corresponding position in the first resolution through a search process between the first input image and the first corrected reference image; and determining a corresponding position in the second resolution by performing a search process between the second input image and the second reference image, using the relative displacement, with reference to a position in the second input image that is equivalent to the corresponding position in the first resolution.

A further embodiment of the present invention provides an image processing program for searching an input image for a region corresponding to a reference image. The image processing program causes a computer to perform the steps of: acquiring at least first and second input images corresponding to the input image and having a first resolution and a second resolution higher than the first resolution, respectively; acquiring first and second reference images corresponding to the reference image and having resolutions corresponding to the first and second resolutions, respectively; calculating a relative displacement of rotation and/or scale between the first input image and the first reference image through a search process between the first input image and the first reference image, correcting the first reference image based on the calculated relative displacement to generate a first corrected reference image, and determining a corresponding position in the first resolution through a search process between the first input image and the first corrected reference image; and determining a corresponding position in the second resolution by performing a search process between the second input image and the second reference image, using the relative displacement, with reference to a position in the second input image that is equivalent to the corresponding position in the first resolution.

### ADVANTAGEOUS EFFECTS OF INVENTION

According to the present invention, an input image can be searched for a region corresponding to a reference image at higher speed.

### BRIEF DESCRIPTION OF DRAWINGS

Fig. 1 is a schematic diagram of an application example of template matching according to an embodiment of the present invention.
Fig. 2 is a block diagram showing a configuration in which template matching according to an embodiment of the present invention is implemented by a personal computer.
Fig. 3 is a schematic diagram for explaining the overview of a template matching process according to a first embodiment of the present invention.
Fig. 4 is a diagram showing an example of an input image and hierarchical images used in the template matching process according to the first embodiment of the present invention.
Fig. 5 is a diagram showing an example of an input image and hierarchical images used in the template matching process according to the first embodiment of the present invention.
Fig. 6 is a diagram showing an example of an input image and hierarchical images, and a template image used in the template matching process according to the first embodiment of the present invention.
Fig. 7 schematically shows the template matching process according to the first embodiment of the present invention.
Fig. 8 is a block diagram showing a functional configuration of an image processing apparatus according to the first embodiment of the present invention.
Fig. 9 is a diagram schematically showing the procedure of generating a template image according to the first embodiment of the present invention.
Fig. 10 is a schematic diagram for explaining the processing in a position detection unit according to the first embodiment of the present invention.
Fig. 11 is a schematic diagram for explaining the processing performed in POC shown in Fig. 10.
Fig. 12 is a flowchart showing the overall procedure of the template matching process according to the first embodiment of the present invention.
Fig. 13 is a diagram schematically showing the template matching process according to a second embodiment of the present invention.
Fig. 14 is a diagram schematically showing the procedure of generating a template image according to the second embodiment of the present invention.
Fig. 15 is a flowchart showing the overall procedure of the template matching process according to the second embodiment of the present invention.
Fig. 16 is a diagram schematically showing the template matching process according to a third embodiment of the present invention.
Fig. 17 is a flowchart showing the overall procedure of the template matching process according to the third embodiment of the present invention.

### DESCRIPTION OF EMBODIMENTS

Embodiments of the present invention will be described in details with reference to the figures. It is noted that in the figures the same or corresponding parts are denoted with the same reference signs and a description thereof is not repeated.

### [A. Overview]

The present embodiment is directed to an image processing apparatus and an image processing method for searching an input image for a region corresponding to a reference image. A template matching process will be described below as a typical example of the image processing method for searching an input image for a region corresponding to a reference image. In this template matching process, a template image is used as a reference image in the matching process.

In the present embodiment, a search process is performed efficiently by means of the coarse-to-fine strategy using multi-resolution. In doing so, in at least one resolution (level), a relative displacement of rotation and/or scale between an image to be matched and a template image is evaluated and corrected, and a search process for position is thereafter performed. Here, in this specification, a relative displacement means at least one of: a relative rotational displacement between an image to be processed and a template image (a reference image); and a displacement due to a difference in relative scale (size). The efficiency of the search process is then increased by passing information such as a relative displacement and a matching position, from the low resolution side to the high resolution side.

### [B. System Configuration]

First, an implementation example of the image processing apparatus that embodies the template matching process according to an embodiment of the present invention will be described.

### ≪b1: Application Example≫

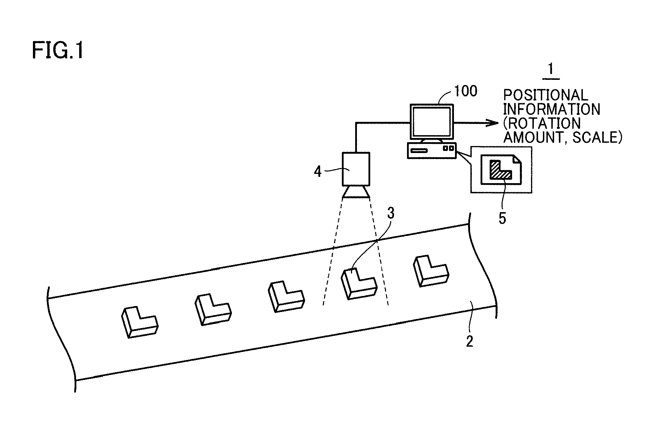

Fig. 1 is a schematic diagram of an application example of template matching according to an embodiment of the present invention. Referring to Fig. 1, a system 1 according to the present embodiment is applied to a production line including a belt conveyor 2, by way of example. In this system 1, objects 3 (works) are successively conveyed on belt conveyor 2, and object 3 is imaged by a camera 4 whereby an image including the appearance of object 3 is acquired (hereinafter the acquired image is also referred to as an "input image").

The input image is transmitted to an image processing apparatus 100. Image processing apparatus 100 performs a process (search process) of searching the input image for a corresponding region based on a template image 5 stored in advance. The positional information and other information obtained through this search process is output to the outside.

In system 1, objects 3 conveyed on belt conveyor 2 may be arranged in various orientations and, therefore, the rotation direction and/or size (enlargement/reduction ratio) of the region representing object 3 included in an input image may not be always constant. Image processing apparatus 100 according to the present embodiment then performs a matching process while adjusting the orientation and/or size of the template image. Specifically, image processing apparatus 100 corrects the template image with some rotation amount and/or scale and thereafter searches the input image for the corresponding region. Image processing apparatus 100 may output information (rotation amount and/or scale) indicating the degree of correction performed in the template matching process, in addition to the positional information indicating the corresponding region, as a search result.

Image processing apparatus 100 may perform a variety of post-processing in addition to such a template matching process. For example, when the similarly (for example, correlation value) between object 3 and the template image is lower than a predetermined value, this object 3 may be excluded as being "out of specification". Other known image processing and/or processing for production lines can be appropriately combined.

### ≪b2: Implementation Example in Personal Computer≫

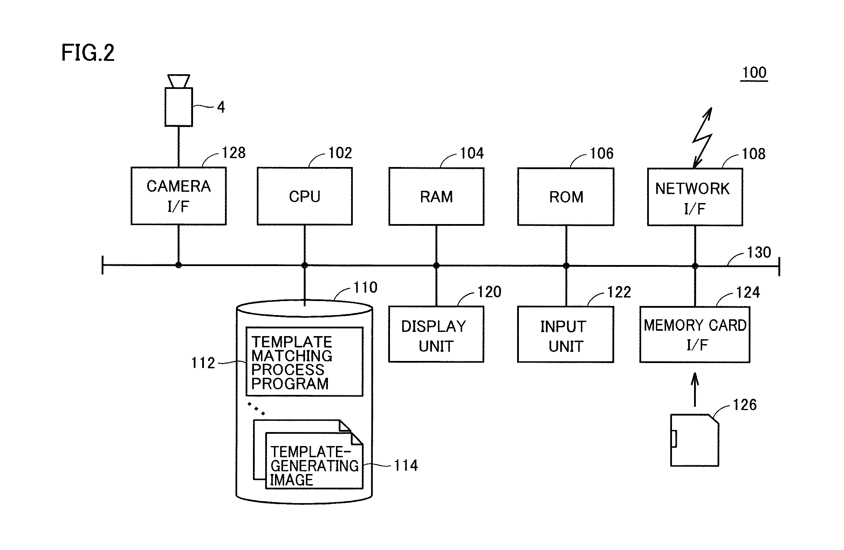

Fig. 2 is a block diagram showing a configuration in which template matching according to an embodiment of the present invention is implemented by a personal computer.

Referring to Fig. 2, image processing apparatus 100 implemented by a personal computer is mainly implemented in a computer having a general architecture. Referring to Fig. 2, image processing apparatus 100 includes, as main components, a CPU (Central Processing Unit) 102, a RAM (Random Access Memory) 104, a ROM (Read Only Memory) 106, a network interface (I/F) 108, an auxiliary storage device 110, a display unit 120, an input unit 122, a memory card interface (I/F) 124, and a camera interface (I/F) 128. The components are connected so as to be able to communicate with each other through a bus 130.

CPU 102 controls the entire image processing apparatus 100 by executing a variety of programs such as an operating system (OS) and a template matching process program 112 stored in ROM 106, auxiliary storage device 110, or other storage devices. RAM 104 functions as a working memory for executing a program in CPU 102 and primarily stores a variety of data necessary to execute the program. ROM 106 stores, for example, an initial program (boot program) executed in image processing apparatus 100 at startup.

Network interface 108 exchanges data with other devices (such as a server device) through a variety of communication media. More specifically, network interface 108 performs data communication through a wired circuit such as Ethernet (registered trademark) (a LAN (Local Area Network) or a WAN (Wide Area Network)) and/or a wireless circuit such as a wireless LAN

Auxiliary storage device 110 is typically configured with, for example, a mass-storage magnetic recording medium such as a hard disk and stores an image processing program (template matching process program 112) for implementing a variety of processes according to the present embodiment, template-generating images 114, and other data. Programs such as an operating system may be further stored in auxiliary storage device 110.

Template-generating image 114 is used for generating a template image. In the present embodiment, a search process is performed efficiently by means of the coarse-to-fine strategy using multi-resolution. Since this coarse-to-fine strategy requires a template image for each resolution, template-generating images 114 are preferably stored resolution by resolution. The coarse-to-fine strategy and the template image will be detailed later.

Display unit 120 displays a GUI (Graphical User Interface) screen provided by the operating system, an image generated through execution of template matching process program 112, and other images.

Input unit 122 typically includes a keyboard, a mouse, and a touch panel and outputs the content of an instruction accepted from the user to CPU 102 or other units.

Memory card interface 124 writes and reads data into/from a variety of memory cards (nonvolatile recording media) 126 such as SD (Secure Digital) cards and CF (Compact Flash (registered trademark)) cards.

Camera interface 128 takes in a template-generating image and/or an input image acquired by imaging a subject from camera 4. However, the main body of image processing apparatus 100 may not have the function of imaging a subject. In such a case, typically, a necessary image is taken in through memory card 126 that stores a template-generating image and/or an input image acquired by any device. That is, memory card 126 is attached to memory card interface 124, so that a template-generating image and/or an input image read out from memory card 126 are stored (copied) into auxiliary storage device 110 or other storage devices.

Template matching process program 112 stored in auxiliary storage device 110 is distributed in a recording medium such as a CD-ROM (Compact Disk-Read Only Memory) or distributed from a server or other devices through a network. Template matching process program 112 may implement a process by invoking necessary modules of program modules provided as part of the operating system executed in image processing apparatus 100 (personal computer), in a predetermined timing and order. In this case, template matching process program 112 does not include modules provided by the operating system per se and cooperates with the operating system to perform image processing. Template matching process program 112 may not be a single program but may be embedded in part of some program. Also in such a case, template matching process program 112 does not include modules shared by such a program per se and cooperates with the program to perform image processing. Such a template matching process program 112 that does not include part of the modules does not depart from the spirit of image processing apparatus 100 according to the present embodiment.

Some or the whole of the functions provided by template matching process program 112 may be implemented by dedicated hardware.

### ≪b3: Implementation Example in Other Configurations≫

In addition to the example of implementation in a personal computer as described above, for example, the implementation may be on a digital camera, a mobile phone, or a smart phone. Another implementation is in the form of cloud service in which at least one server device implements the processing according to the present embodiment. In this case, the user transmits at least two target images to be processed to a server device (the cloud side) using his/her terminal (for example, a personal computer or a smart phone), and the server device performs image processing according to the present embodiment on the transmitted target images. The server device may not perform all the functions (processes), and the user terminal and the server device may cooperate to perform the image processing according to the present embodiment.

### [C. First Embodiment]

The details of the template matching process according to the present first embodiment will now be described.

### ≪c1: Process Overview≫

The present embodiment employs a method of searching an input image for a region corresponding to a template image by combining a search process in consideration of relative displacement between an input image/hierarchical image (a partial image included therein) and a template image with the coarse-to-fine strategy using multi-resolution.

More specifically, images corresponding to the input image that have a plurality of resolutions are acquired, and the template matching process is performed in increasing order of resolution of the images to search for a region corresponding to the template image. Although a template matching process for an image having a low resolution takes a short time for operation, the accuracy of the found position is relatively low (the precision of the corresponding resolution is the limit). A template matching process for an image having a higher resolution is then performed. Here, the process is performed efficiently using the result of the template matching process previously performed. Therefore, the operation time can be reduced even when the resolution is high. The same process is performed subsequently, so that the positional information found in the image having the highest resolution is output as a result.

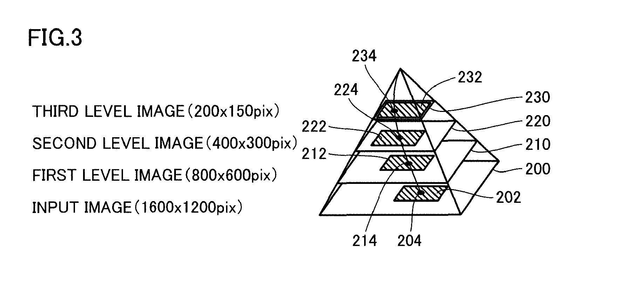

Fig. 3 is a schematic diagram for explaining the overview of the template matching process according to the first embodiment of the present invention. Fig. 3 shows an example of multi-resolution analysis when the conversion scale is 1/2 and the number of hierarchy levels is four, where the image size of an input image is 1600×1200 pix (pixels). Referring to Fig. 3, a plurality of images with different resolutions are generated from an input image 200. In this example, an image produced by reducing input image 200 to an image size of 800×600 pix is an image on a first level (hereinafter also referred to as "first level image 210"). An image produced by reducing first level image 210 to an image size of 400×300 pix is an image on a second level (hereinafter also referred to as "second level image 220"). An image produced by reducing second level image 220 to an image size of 200×150 pix is an image on a third level (hereinafter also referred to as "third level image 230").

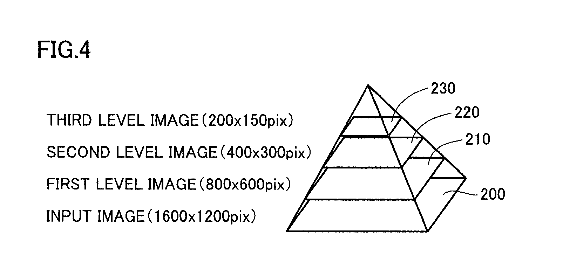

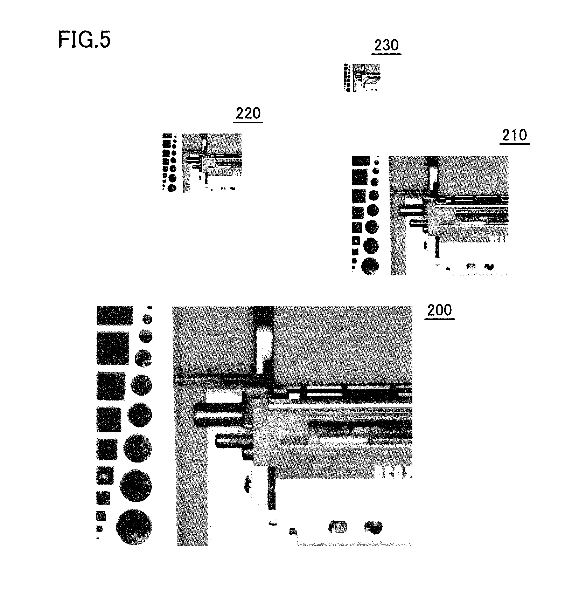

Fig. 4 and Fig. 5 are diagrams showing an example of an input image and hierarchical images used in the template matching process according to the first embodiment of the present invention. As shown in Fig. 4, hierarchical images with different resolutions are generated from input image 200. As shown in Fig. 5, the hierarchical images (first level image 210, second level image 220, and third level image 230) are those produced by reducing input image 200 each at a predetermined scale.

Referring to Fig. 3 again, first, a search range 232 is set in third level image 230, and a template matching process is performed between the regions successively extracted from search range 232 (hereinafter also referred to as the "extracted region") and the corresponding template image. Typically, the extracted region has the same image size as the template image. It is assumed that a position 234 of the extracted region having the highest similarity is specified by the template matching process.

A search range 222 is set in second level image 220 with reference to the specified position 234 of the extracted region, and the template matching process is performed between the extracted regions successively extracted from search range 222 and the corresponding template image. It is assumed that a position 224 of the extracted region having the highest similarity is specified as a result of this template matching process.

Furthermore, a search range 212 is set in first level image 210 with reference to the position 224 of the extracted region, and the template matching process is performed between the extracted regions successively extracted from search range 212 and the corresponding template image. It is assumed that a position 214 of the extracted region having the highest similarity is specified as a result of this template matching process.

In the final step, a search range 202 is set in input image 200 with reference to this position 214 of the extracted region, and the template matching process is performed between the extracted regions successively extracted from search range 202 and the corresponding template image. It is assumed that a position 204 of the extracted region having the highest similarity is specified as a result of this template matching process. This position 204 of the extracted region is then output as a search result.

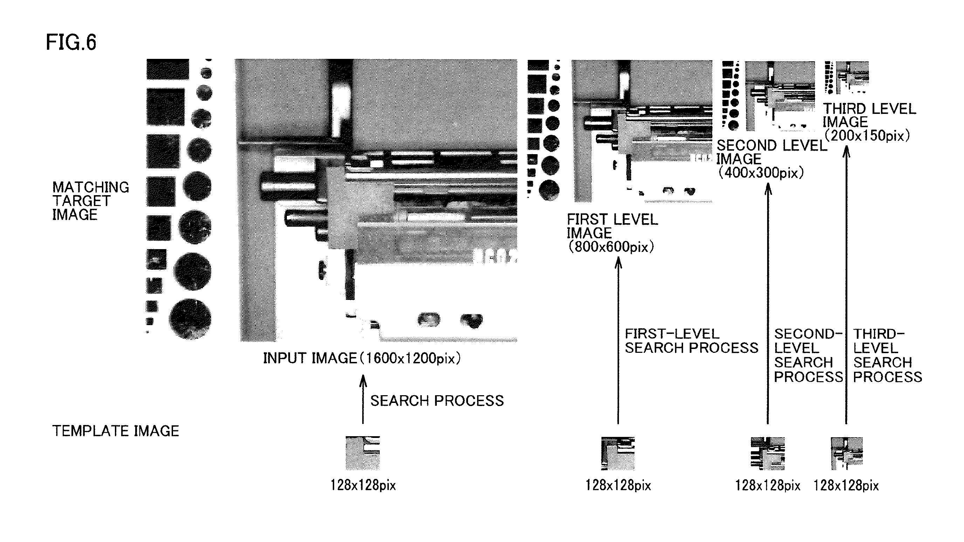

Fig. 6 is a diagram showing an example of an input image and hierarchical images, and a template image used in the template matching process according to the first embodiment of the present invention. Referring to Fig. 6, in the present embodiment, a search process is performed using template images having a common size (for example, 128×128 pix) for the input image and the hierarchical images. More specifically, each template image is successively compared with a target input image or an extracted region extracted from any one of the hierarchical images. Here, a matching process is performed after the template image is appropriately corrected in accordance with relative displacement between the input image/hierarchical image (partial image included therein) and the template image. Here, the efficiency of the process is increased using the search result in the preceding level.

### ≪c2: Increasing Efficiency of Search Process≫

A technique for increasing the process efficiency in the template matching process according to the present embodiment will now be described. In the present embodiment, a search process is performed with the corrected relative displacement between the input image/hierarchical image (partial image included therein) and the template image. The relative displacement is a relative rotational displacement and/or a displacement due to difference in relative scale (size) between the input image/hierarchical image (partial image included therein) and the template image. In the description below, the rotation amount is considered as a relative displacement, by way of example. However, embodiments are not limited thereto and the same configuration can be applied to the configuration in consideration of a relative scale. A configuration example using the Rotation Invariant Phase-Only Correlation (RIPOC) method will be described as an example of the search process in consideration of a relative rotation amount.

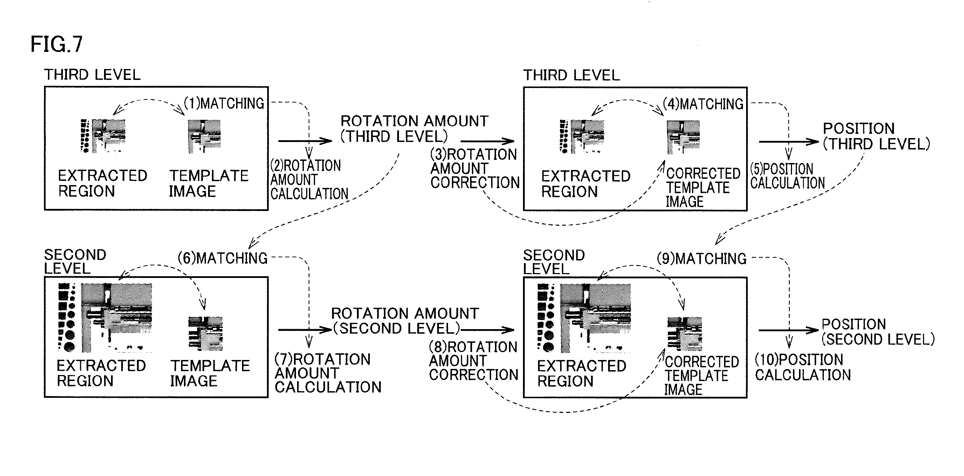

Fig. 7 schematically shows the template matching process according to the first embodiment of the present invention. Fig. 7 illustrates the process for the third level image and the second level image. The same process is performed on the first level image and the input image through the same procedure.

Referring to Fig. 7, first, a search range is set in the third level image, and an extracted region as a target of the matching process is extracted from the search range. A search process for rotation amount is performed between this extracted region and the template image for the third level ((1) matching). The search range in the third level image may be the entire third level image. As a result of the search process for rotation amount, a relative rotation amount (a relative displacement) in the third level between the extracted region and the template image is calculated ((2) rotation amount calculation). The template image is then corrected using the calculated relative rotation amount ((3) rotation amount correction). As a result of this correction, a corrected template image is generated.

A search process for position is then performed between the extracted region and the corrected template image ((4) matching). As a result of this search process for position, the similarity in the third level between the extracted region and the corrected template image is calculated. By repeating the procedure (1) to (4) shown in Fig. 7, the extracted region having the highest similarity to the corrected template image is specified. The position indicating the extracted region having the highest similarity (the translation amount indicating the relative position of the extracted region that is the best match with the corrected template image in the search range) is calculated ((5) position calculation). Now the search process in the third level is completed.

A search process in the second level is then started. This search process in the second level uses the relative rotation amount (relative displacement) and the translation amount with respect to the template image, calculated in the third level, for the extracted region having the highest similarity.

Specifically, a search range is set in the second level image, and an extracted region as a target of the matching process is set from the search range. A search process for rotation amount is performed between this extracted region and the template image for the second level ((6) matching). Here, the search range is set with reference to the position, calculated in the third level, indicating the extracted region having the highest similarity.

The search process for rotation amount is targeted only for a predetermined range with reference to the rotation amount calculated in the third level for the extracted region having the highest similarity. For example, if the rotation amount calculated in the third level is θ, only the range θ±α (α: predetermined variation angle) is searched in the search process for rotation amount in the second level.

More specifically, in the template matching process in the second level, the search range (that is, the extracted region) as a target of the search process for position and the search range (angular variation range) as a target of the search process for rotation amount are limited based on the result of the template matching process in the third level.

As a result of the search process for rotation amount, the relative rotation amount (relative displacement) in the second level between the extracted region and the template image is calculated ((7) rotation amount calculation). The template image is then corrected using the calculated relative rotation amount ((8) rotation amount correction). As a result of this correction, a corrected template image is generated.

A search process for position is then performed between the extracted region and the corrected template image ((9) matching). As a result of this search process for position, the similarity in the second level between the extracted region and the corrected template image is calculated. By repeating the procedure (6) to (9) shown in Fig. 7, the extracted region having the highest similarity to the corrected template image is specified. The position indicating the extracted region having the highest similarity (the translation amount indicating the relative position of the extracted region that is the best match with the corrected template image in the search range) is calculated ((10) position calculation). Now the search process in the second level is completed.

The same search process is subsequently performed on the first level and the input image.

As described above, image processing apparatus 100 according to the present embodiment fulfills the functions described below to search an input image for a region corresponding to a template-generating image (reference image). That is, image processing apparatus 100 has the function (input image acquisition unit) of acquiring third and second level images (first and second input images) corresponding to the input image and having a resolution of the third level (first resolution) and a resolution of the second level (second resolution higher than the first resolution), respectively. Image processing apparatus 100 further has the function (reference image generation unit) of generating template images corresponding to the third and second levels (first and second reference images having resolutions corresponding to the first and second resolutions, respectively) from a template-generating image (reference image).

Image processing apparatus 100 further has the function (first corresponding position determining unit) of calculating a relative displacement of rotation and/or scale between an extracted region extracted from the third level image and the template image corresponding to the third level (first input image and first reference image) through a search process between the third level image (first input image) and the template image corresponding to the third level (first reference image), correcting the template image (first reference image) through correction of the template image (first reference image) based on the calculated relative displacement to generate a corrected template image (first corrected reference image), and determining a corresponding position in the third level (first resolution) through a search process between the third level image (first input image) and the corrected template image (first corrected reference image).

Image processing apparatus 100 further has the function (second corresponding position determining unit) of determining a corresponding position in the second level (second resolution) by performing a search process between the second level image (second input image) and the template image (second reference image), using the relative displacement calculated by the function above (first corresponding position determining unit), with reference to a position in the second level image (second input image) that is equivalent to the corresponding position in the third level (first resolution). More specifically, the second corresponding position determining unit calculates a relative displacement of rotation and/or scale between the second input image and the second reference image by performing a search process between the second input image and the second reference image, corrects the second reference image based on the calculated relative displacement to generate a second corrected reference image, and determines a corresponding position in the second resolution through a search process between the second input image and the second corrected reference image.

Image processing apparatus 100 further has the function (second correction unit) of calculating a relative displacement of rotation and/or scale between the second level image (second input image) and the template image (second reference image) by performing a search process between the second level image (second input image) and the template image (second reference image) with limitation on a search range in accordance with the relative displacement between an extracted region extracted from the third level image and a template image corresponding to the third level (first input image and first reference image), correcting the template image (second reference image) the second reference image based on the calculated relative displacement to generate a corrected template image (second corrected reference image), and determining a corresponding position in the second resolution through a search process between the second level image (second input image) and the corrected template image (second corrected reference image).

Here, the second corresponding position determining unit allows the reference image acquisition unit to generate the second reference image according to the relative displacement between the first input image and the first reference image.

As described above, image processing apparatus 100 in accordance with the present embodiment increases the efficiency of the process using the result of the template matching process performed in the preceding level.

### ≪c3: Functional Configuration≫

Next, a functional configuration of the image processing apparatus and/or the image processing program according to the present embodiment will be described.

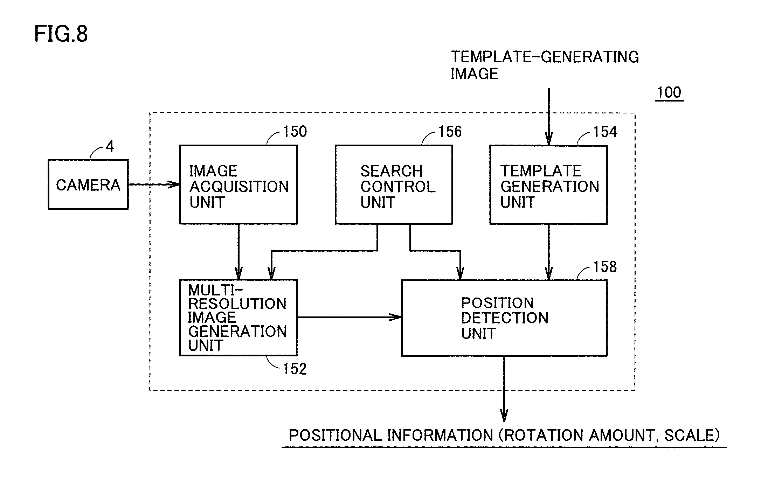

Fig. 8 is a block diagram showing a functional configuration of image processing apparatus 100 according to the first embodiment of the present invention. Referring to Fig. 8, image processing apparatus 100 according to the present embodiment includes, as its main functional configuration, an image acquisition unit 150, a multi-resolution image generation unit 152, a template generation unit 154, a search control unit 156, and a position detection unit 158. The functional configuration is implemented by CPU 102 executing template matching process program 112 in image processing apparatus 100 shown in Fig. 2. The details of the functional configuration will be described below.

### ≪c4: Image Acquisition Unit 150≫

Image acquisition unit 150 acquires an input image to be processed. Typically, an input image generated by the connected camera 4 imaging a subject is acquired as an input image. Alternatively, an input image generated by any external device may be acquired through a variety of recording media or communication media.

### ≪c5: Multi-Resolution Image Generation Unit 152≫

Multi-resolution image generation unit 152 acquires images corresponding to the input image that have a plurality of resolutions (hierarchical images). Typically, multi-resolution image generation unit 152 generates a plurality of images (hierarchical images) with different resolutions, corresponding to the input image acquired by image acquisition unit 150. As shown in Fig. 4 and Fig. 5, when the image size of the input image is 1600×1200 pix, the conversion scale is 1/2, and the number of hierarchical level is 4, images (first level image, second level image, third level image) corresponding to the input image are generated, which have the image size of 800×600 pix, 400×300 pix, and 200×150 pix, respectively.

In this example, since the conversion scale is 1/2, for example, a point (x, y) in the third level image is obtained as the mean value of 2×2 pixels including points (2x, 2y), (2x+1, 2y), (2x, 2y+1), (2x+1, 2y+1) in the second level image.

The conversion scale may be determined flexibly as necessary. For example, a conversion scale of a smaller value such as 1/3 may be employed rather than 1/2. In this case, the number of hierarchical levels can be reduced thereby increasing the processing speed. Conversely, a conversion scale of a larger value such as 1/1.5 may be employed. In this case, the number of hierarchical levels is increased and the operation load may be increased. However, a more detailed search can be conducted thereby increasing robustness.

The conversion scale may not be the same among the levels. For example, while the conversion scale may be set small on the side closer to the input image (high resolution side), the conversion scale may be increased with lower resolution. On the low resolution side that includes something other than the search target object, a search can be conducted in more detail to ensure robustness, and meanwhile, on the high resolution side, higher speed is emphasized rather than robustness, thereby enabling a search process well-balanced overall.

### ≪c6: Template Generation Unit 154≫

Template generation unit 154 sets a template image for each hierarchical image. Typically, template generation unit 154 generates a template image corresponding to each hierarchical image (resolution) from the input template-generating image 114.

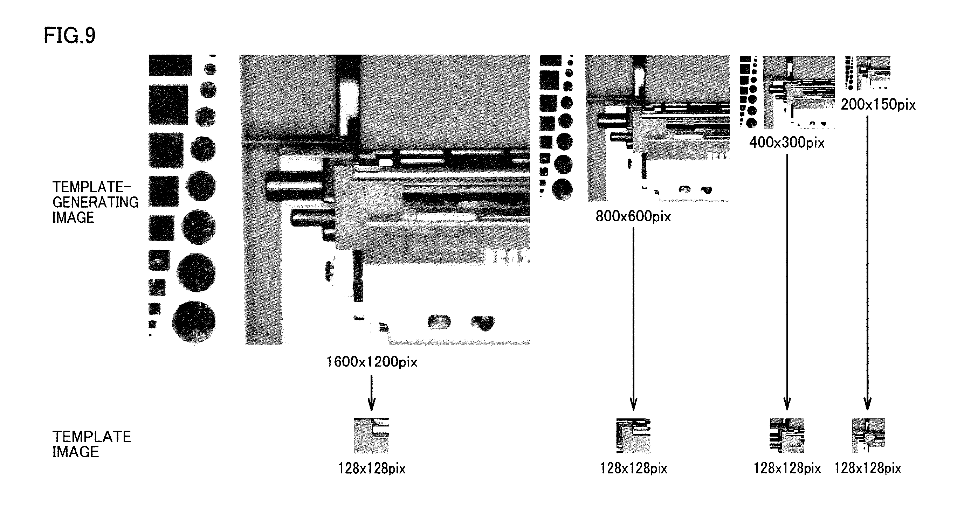

Fig. 9 is a diagram schematically showing the procedure of generating a template image according to the first embodiment of the present invention. As shown in Fig. 9, template images having the same size are generated, which correspond to a plurality of template-generating images corresponding to the respective hierarchical images.

More specifically, the user takes a picture of a subject serving as a reference for setting a template image and thereby acquires a template-generating image. The user then designates a position to be searched in the acquired template-generating image. Template generation unit 154 sets each template image such that the position to be searched is located at the barycenter. In the example shown in Fig. 9, template generation unit 154 sets template images each having an image size of 128×128 pix. Template images corresponding to the other hierarchical images are set in the same manner. In the example shown in Fig. 9, the template images corresponding to the other hierarchical images are also set in the same image size of 128×128 pix as the template image initially set. The template images corresponding to the other hierarchical images are also set such that the searched position is located at the barycenter.

The template images may be set through the following approach in place of the method described above.
(1) Although Fig. 9 shows an example in which template images having the same image size among hierarchical images are set, the region included in the template image may be the same or larger with lower (coarser) resolution of the hierarchical images.
(2) Although the template image is set such that the position to be searched is located at the barycenter in the example described above, embodiments are not limited to this example. For example, the template image may be set at a position away from the searched position by a certain amount (Δx, Δy). In this case, the position to be searched can be specified by shifting the result from the position actually searched using the template image by the certain amount (Δx, Δy).

### ≪c7: Search Control Unit 156≫

Search control unit 156 efficiently performs a search process by means of the coarse-to-fine strategy using multi-resolution as described with reference to Fig. 3. The procedure for performing a position search in the input image will be described below. Here, the procedure of multi-resolution analysis will be described where the image size of the input image is 1600×1200 pix, the conversion scale is 1/2, and the number of hierarchical levels is 4.

First, in the third level image, a position search is conducted using a template image corresponding to the third level image. The corresponding position (x3, y3) is thus specified. More specifically, a region having the same image size as the template image corresponding to the third level image is extracted from the third level image, and the content of this extracted region (the extracted region) is input to position detection unit 158. The position is thus found.

More specifically, as shown in Fig. 6 above, a region serving as a target of the template matching process is extracted from the third level image (200×150 pix). In this extraction procedure, a region of the same image size (128×128 pix) as the template image corresponding to the third level image is extracted such that the barycenter position of the extracted region matches with the barycenter position of the third level image. The template matching process is performed on the extracted region and the template image to specify the rotation amount and the position.

Since it is estimated that the correct position is located in the vicinity of the position (x3, y3) on the third level image that is specified in the third level image, it is presumably located in the vicinity of the coordinates that are approximately double (the reciprocal of the conversion scale) the position (x3, y3) on the third level image, in the second level image. Once the position is specified on the third level image, an approximate position on the second level image is then determined using the result obtained by the position search in the third level image, and a position search is thereafter conducted.

That is, as shown in Fig. 6 as described above, the coordinates that are double the position specified in the third level image are then set as an initial position in the second level image. A region as a target of the template matching process with the template image corresponding to the second level image is then extracted from the second level image. This extraction procedure is the same as the extraction procedure for the third level image. A template matching process is performed on the extracted region extracted from the second resolution image and the template image to specify the rotation amount and the position.

An approximate position on the image in the first level image is then obtained in the same manner using the result of the position search in the second level image. The correction solution is gradually approached such that the result on the low resolution side is set as the initial position on the high resolution side. The position is specified in the same manner for the first level image and the input image, whereby the final position is specified.

### ≪c8: Position Detection Unit 158≫

Position detection unit 158 uses the input image and/or the extracted region extracted from the hierarchical image and the corresponding template image to search for the rotation amount and the position. In the present embodiment, the RIPOC (Rotation Invariant Phase Only Correlation) method, which is a rotation-adapted position detection technique, is used by way of example.

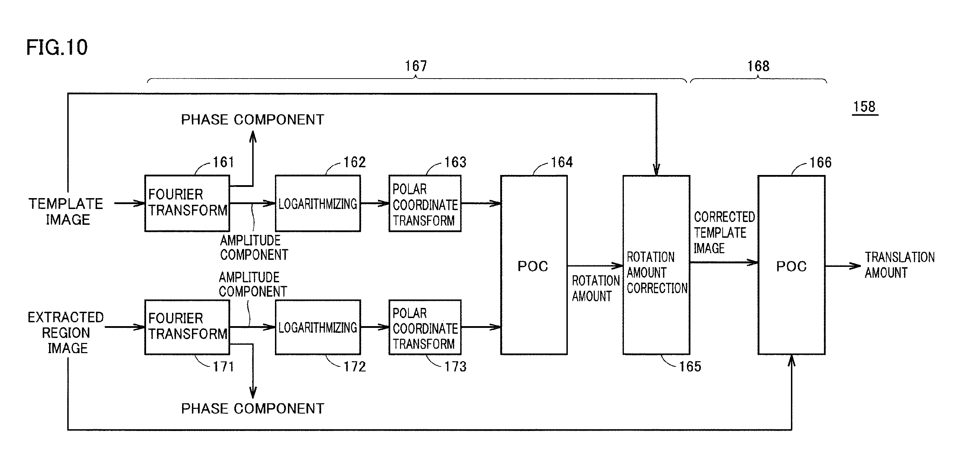

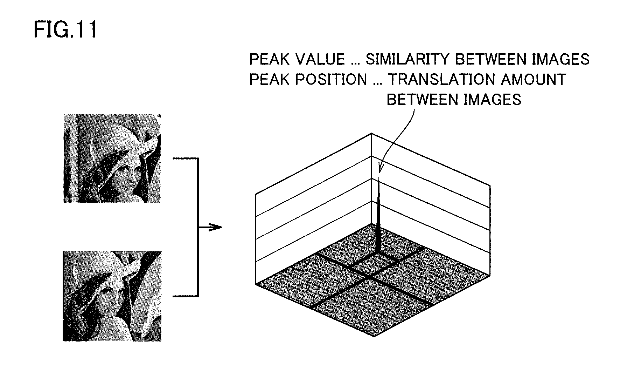

Fig. 10 is a schematic diagram for explaining the processing in position detection unit 158 according to the first embodiment of the present invention. Fig. 11 is a schematic diagram for explaining the processing performed in POC shown in Fig. 10.

Referring to Fig. 10, the RIPOC method includes a process of calculating how much the extracted region is rotated with respect to the template image and correcting the rotation angle of the template image (reference sign 167) and a process of calculating how much similarity and translation amount exist between the corrected template image obtained by correction of the rotation angle and the extracted region (reference sign 168).

More specifically, position detection unit 158 includes Fourier transform processes 161, 171, logarithmizing processes 162, 172, polar coordinate transform processes 163, 173, a POC process 164, a rotation amount correction process 165, and a POC process 166.

Fourier transform processes 161 and 171 each calculate a frequency component (amplitude component and phase component) included in the template image and the extracted region. This RIPOC process does not necessarily require a phase component and therefore may not calculate a phase component.

Logarithmizing process 162 and polar coordinate transform process 163 logarithmize the amplitude component for the template image and transforms it into polar coordinates. Similarly, logarithmizing process 172 and polar coordinate transform process 173 logarithmize the amplitude component for the extracted region and transforms it into polar coordinates. As a result of the transformation into polar coordinates, the rotation amount is represented as a coordinate point on two-dimensional coordinates.

POC process 164 calculates the similarity and the translation amount (equivalent to the rotation amount) for the results of polar coordinate transformation output from polar coordinate transform processes 163 and 173. Fig. 11 schematically shows the process result in POC process 164. As shown in Fig. 11, the translation amount between two images is represented as a peak position. In the POC process, the images are successively displaced from each other and the correlation value is calculated between the spatial frequency components included therein to search for the one having the highest similarity. The translation amount between images can be calculated by searching a range of about ±1/4 of the image size of the template image. That is, in POC process 164, the position having the highest similarity between the polar coordinate transform results is specified, and the corresponding rotation amount is output to rotation amount correction process 165.

Rotation amount correction process 165 rotates and corrects the template image in accordance with the rotation amount calculated in POC process 164. That is, in rotation amount correction process 165, the template image is rotated and corrected to generate a corrected template image.

As a method of rotating and correcting the template image in rotation amount correction process 165, the template image may be rotated per se in the real space. Alternatively, as described later, when the frequency space is handled in POC process 166, rotation in the real space is not required but data (amplitude information and positional information) subjected to Fourier transform that is internal representation of the POC process may be rotated.

POC process 166 calculates the similarity and the translation amount between the corrected template image and the extracted region. The position having the highest similarity indicates a region that matches with the corrected template image included in the input image.

Here, increasing the efficiency of rotation amount correction process 165 by means of the coarse-to-fine strategy using multi-resolution will be described. Since the rotation amount of object 3 included in the input image is uncertain in the third level, it is necessary to search for the rotation amount in the range of up to 360°. However, since the angle that can be searched in the RIPOC method is ±90°, the rotation amount (θ+π) is a candidate for calculation in addition to the found rotation amount θ (-90° ≤ θ ≤ 90°). Therefore, POC process 164 and rotation amount correction process 165 shown in Fig. 10 produce the results of rotating and correcting the template image with two kinds of rotation amounts θ and (θ+π), and POC process 166 performs a POC process (position search) for each of the corrected template images corrected with the two kinds of rotation amounts. The heights of the peak positions by the POC process for the template images are compared, and the one having the higher peak position is output as a translation amount. As for the rotation amount, the rotation correction amount of the template used when the selected peak position is calculated is output as the rotation amount in the third level.

The second and subsequent levels are processed in the same manner. However, the search range for the rotation amount in the higher level can be limited based on the rotation amount calculated in the lower level. Two template images with corrected rotation amounts are used in the third level, whereas the corrected template image corrected with one of the rotation amounts can be used in the second and subsequent levels. Such processing only requires a single POC search, which is conducted twice in the process of calculating the translation amount in POC process 166, thereby reducing the operation time.

Not only the use of one of the template images but also the search range is limited based on the result in the lower level during the search for the peak position in the POC process when the rotation amount is calculated in POC process 164 and rotation amount correction process 165 shown in Fig. 10, thereby reducing the operation time and stabilizing the accuracy. More specifically, for the rotation amount θ calculated in the third level, only the range of θ±α is searched in the second level.

### ≪c9: Process Procedure≫

The overall procedure in the template matching process according to the present embodiment will be described.

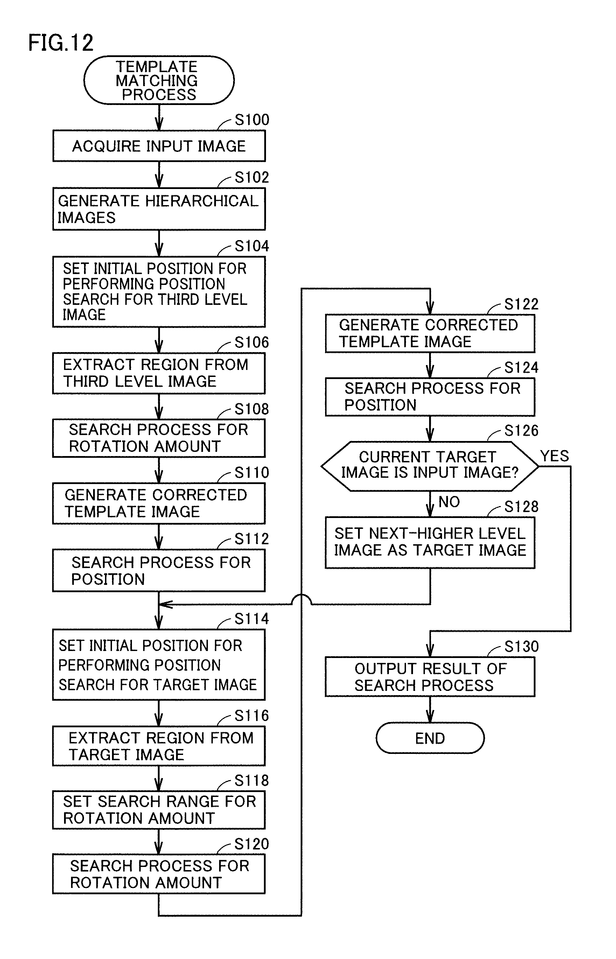

Fig. 12 is a flowchart showing an overall procedure of the template matching process according to the first embodiment of the present invention. Each step shown in Fig. 12 is typically implemented, for example, by CPU 102 (Fig. 2) executing template matching process program 112.

Referring to Fig. 12, first, CPU 102 acquires an input image, for example, from camera 4 (step S100). CPU 102 then resolution-multiplexes the input image to generate hierarchical images (step S102). Here, it is assumed that the first level image, the second level image, and the third level image are generated corresponding to the input image. It is noted that template images corresponding to the input image and each hierarchical image are prepared in advance.

CPU 102 sets an initial position for conducting a position search in the third level image (step S104). In the third level image, there is no information on the lower level side and therefore, for example, the barycenter position of the image may be set as the initial position. CPU 102 then extracts a region having the same image size as the template image from the third level image (step S106). The extracted region is set such that the initial position set in step S104 is located at the barycenter. CPU 102 then conducts a search process for rotation amount with input of the extracted region and the template image (step S108) and generates a corrected template image based on the rotation amount obtained through the search process for rotation amount (step S110). Typically, the corrected template image is generated by correcting the template image. CPU 102 further performs a search process for position with input of the corrected template image generated in step S110 and the extracted region (step S112).

The process for the higher levels is then performed.

CPU 102 sets an initial position for conducting a position search on the target hierarchical image or the input image, based on the position calculated in the lower level (step S114). CPU 102 then extracts a region having the same image size as the corresponding template image from the target hierarchical image or the input image (step S116).

CPU 102 then sets a search range for rotation amount, based on the rotation amount for correcting the template image that is calculated in the lower level (step S118), thereafter performs a search process for rotation amount with input of the extracted region and the template image (step S120), and generates a corrected template image based on the rotation amount obtained through the search process for rotation amount (step S122). Typically, a corrected template image is generated by correcting the template image. CPU 102 further performs a search process for position with input of the corrected template image generated in step S122 and the extracted region (step S124).

CPU 102 then determines whether the target image at present is the input image (step S126). If the target image at present is not the input image (NO in step S126), the image in the next higher level is set as a target (step S128), and the process following step S114 is repeated.

If the target image at present is the input image (YES in step S126), the result of the last search process in step S124 is output (step S130). The process then ends.

### ≪c10. Advantages≫

In the present embodiment, the input image is resolution-multiplexed so that the search is conducted from the low resolution side while narrowing down both the relative displacement and the position, thereby reducing the operation volume and improving the accuracy robustness.

### [D. Second Embodiment]

In the foregoing first embodiment, when information of position and rotation amount is passed from the low resolution side to the high resolution side, a template image prepared in advance is rotated and corrected after a search range for rotation amount is limited. By contrast, in the second embodiment, a template image is dynamically generated based on information of the rotation amount detected on the low resolution side.

### ≪d1: Process Overview≫

The overview of the template matching process according to the present embodiment is substantially the same as the one described above with reference to Fig. 3 to Fig. 5. A detailed description is therefore not repeated.

### ≪d2: Increasing Efficiency of Search Process≫

A technique for increasing the process efficiency in the template matching process according to the present embodiment will now be described. In the present embodiment, a search process is performed with the corrected relative displacement between the hierarchical image (partial image included therein) and the template image on the low resolution side. Then, the rotation amount (the peak position shown in Fig. 11 as described above) used when the position having the highest similarity is calculated in this search process is used for generating a template image in the next level.

Also in the present embodiment, the Rotation Invariant Phase-Only Correlation (RIPOC) method is used as an example of the search process in consideration of the relative rotation amount. However, the embodiment is not limited thereto.

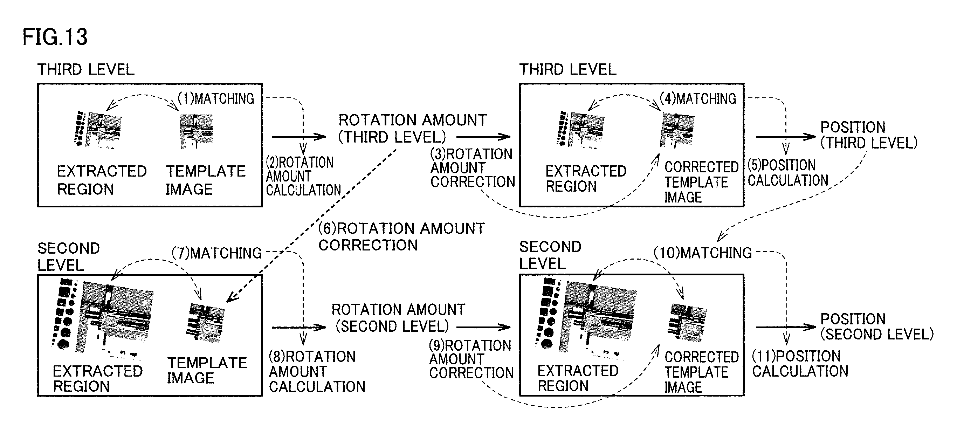

Fig. 13 is a diagram schematically showing the template matching process according to the second embodiment of the present invention. Although Fig. 13 illustrates the processing for the third level image and the second level image, the same process is performed on the first level image and the input image through the same process procedure.

Referring to Fig. 13, first, a search range is set in the third level image, and an extracted region as a target of the matching process is extracted from the search range. A search process for rotation amount is performed between this extracted region and the template image for the third level ((1) matching). The search range in the third level image may be the entire third level image. As a result of this search process for rotation amount, the relative rotation amount (relative displacement) in the third level between the extracted region and the template image is calculated ((2) rotation amount calculation). The template image is then corrected using the calculated relative rotation amount ((3) rotation amount correction). As a result of this correction, a corrected template image is generated.

A search process for position is then performed between the extracted region and the corrected template image ((4) matching). As a result of the search process for position, the similarity in the third level between the extracted region and the corrected template image is calculated. By repeating the procedure (1) to (4) shown in Fig. 13, an extracted region having the highest similarity to the corrected template image is specified. The position indicating the extracted region having the highest similarity (the translation amount indicating the relative position of the extracted region that is the best match with the corrected template image in the search range) is calculated ((5) position calculation). Now the search process in the third level is completed.

A search process in the second level is then started. This search process in the second level uses the relative rotation amount (relative displacement) and the translation amount with respect to the template image, calculated in the third level, for the extracted region having the highest similarity.

Specifically, considering the rotation amount when the similarity indicates the highest value in the third level, a template image is dynamically generated (or recreated) ((6) rotation amount correction). The degree of matching between the template image and the extracted region thus can be increased in advance.

More specifically, in the template matching process in the second level, a template image corresponding to the second level is generated in accordance with the amount of correction (rotation amount) used in generating the corrected template image corresponding to the third level.

An initial position is set in the second level image based on the calculated translation amount, and an extracted region as a target of the matching process is set based on the initial position. A search process for rotation amount is performed between the extracted region and the template image for the second level ((7) matching). The search range of the search process for rotation amount is set, for example, as ±α (α: predetermined variable angle). In the present embodiment, a template image is generated beforehand considering the approximate rotation amount, thereby limiting the search range.

As a result of the search process for rotation amount, the relative rotation amount (relative displacement) in the second level between the extracted region and the template image is calculated ((8) rotation amount calculation). The template image is then corrected using the calculated relative rotation amount ((9) rotation amount correction). As a result of this correction, a corrected template image is generated.

A search process for position is then performed between the extracted region and the corrected template image ((10) matching). As a result of this search process for position, the similarity in the second level between the extracted region and the corrected template image is calculated. By repeating the procedure (6) to (10) shown in Fig. 13, the extracted region having the highest similarity to the corrected template image is specified. The position indicating the extracted region having the highest similarity (the translation amount indicating the relative position of the extracted region that is the best match with the corrected template image in the search range) is calculated ((11) position calculation). Now the search process in the second level is completed.

The same search process is subsequently performed also on the first level and the input image in the same manner.

The procedure of generating a template image will now be described.

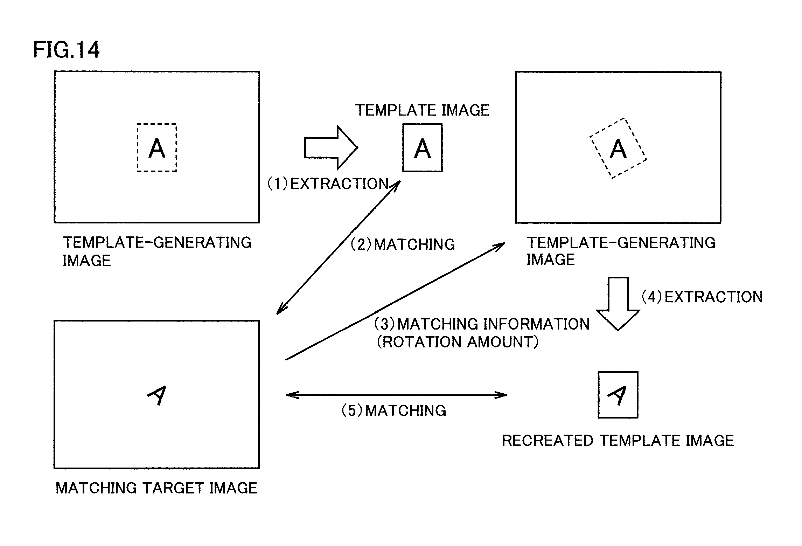

Fig. 14 is a diagram schematically showing the procedure of generating a template image according to the second embodiment of the present invention. It is assumed that the template image corresponding to each level is generated by extracting from the template-generating image.

Referring to Fig. 14, first, the template image corresponding to the lowest level is extracted from the template-generating image and thus generated ((1) extraction). This extraction is set as desired by the user. The matching target image (hierarchical image) is searched for the corresponding position, using the generated template image of the lowest level ((2) matching). Here, the relative displacement (in this example, rotation amount) with respect to the template image is calculated.

In the processing in the next level, the found matching information (rotation amount) is used ((3) matching information (rotation amount)) to extract a template image from the template-generating image ((4) extraction). A template image is thus generated, which is adapted to the state generally close to the rotation amount of the target object appearing in the matching target image. The matching target image (hierarchical image) is then searched for the corresponding position, using the generated template image ((5) matching). Subsequently, the corresponding position is searched for in the same manner.

As described above, in the present embodiment, a template image on the high resolution side is generated using the rotation amount on the low resolution side.

As described above, image processing apparatus 100 according to the present embodiment fulfills the following functions to search an input image for a region corresponding to a template-generating image (reference image). More specifically, image processing apparatus 100 has the function (input image acquisition unit) of acquiring third and second level images (first and second input images) corresponding to the input image and having a resolution of the third level (first resolution) and a resolution of the second level (second resolution higher than the first resolution), respectively. Image processing apparatus 100 further has the function (reference image generation unit) of generating template images corresponding to the third and second levels (first and second reference images having resolutions corresponding to the first and second resolutions, respectively) from a template-generating image (reference image).

Image processing apparatus 100 further has the function (first correction unit) of calculating a relative displacement between an extracted region extracted from the third level image and the template image corresponding to the third level (first input image and first reference image) through a search process between the third level image (first input image) and the template image corresponding to the third level (first reference image), and correcting the template image (first reference image) based on the calculated relative displacement to generate a corrected template image (first corrected reference image). Image processing apparatus 100 further has the function (first corresponding position determining unit) of determining a corresponding position in the third level (first resolution) through a search process between the third level image (first input image) and the corrected template image (first corrected reference image).

Image processing apparatus 100 further has the function (second corresponding position determining unit) of determining a corresponding position in the second level (second resolution) by performing a search process on the second level image (second input image), based on the corrected template image corresponding to the second level (second corrected reference image), with reference to a position in the second level (second resolution) that is equivalent to the corresponding position in the third level (first resolution).

Image processing apparatus 100 generates a second template image (second reference image) in accordance with the rotation amount (the amount of correction) used for generating the first corrected template image (first corrected reference image).

Image processing apparatus 100 further generates a corrected template image (second corrected reference image) by performing a search process between the second level image (second input image) and the template image corresponding to the second level (second reference image) that is generated in accordance with the rotation amount (the amount of correction) used for generating the corrected template image corresponding to the third level (first corrected reference image).

As described above, image processing apparatus 100 according to the present embodiment increases the efficiency of the process using the result of the template matching process performed in the preceding level.

### ≪d3: Functional Configuration≫

The functional configuration of the image processing apparatus and/or the image processing program according to the present embodiment is the same as in the block diagram shown in Fig. 8. However, the process of generating a template image by template generation unit 154 differs from the process in the first embodiment as described above.

### ≪d4: Process Procedure≫

The overall procedure of the template matching process according to the present embodiment will now be described.

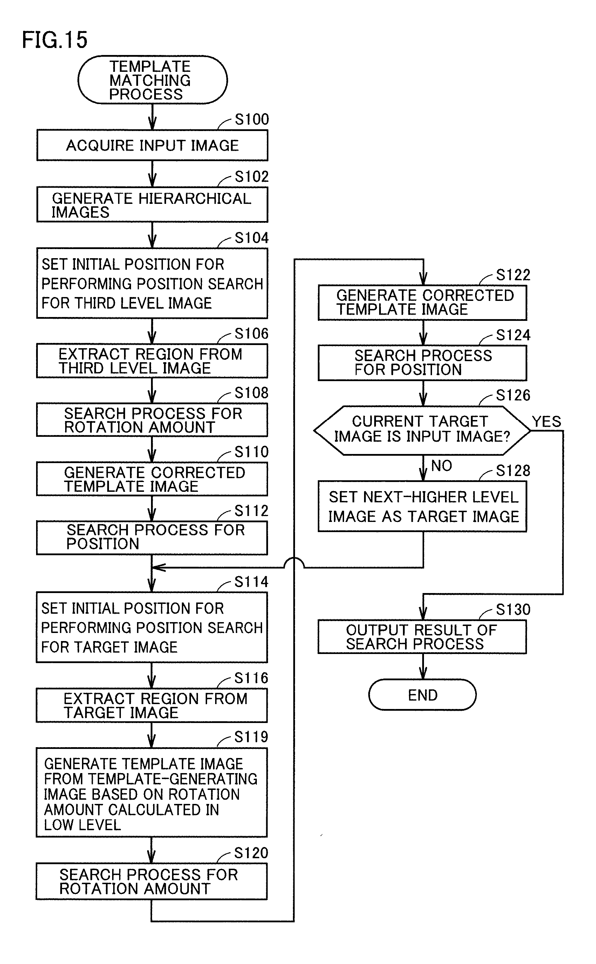

Fig. 15 is a flowchart showing the overall procedure of the template matching process according to the second embodiment of the present invention. Each step shown in Fig. 15 is typically implemented, for example, by CPU 102 (Fig. 2) executing template matching process program 112.

The process procedure shown in Fig. 15 differs from the process procedure shown in Fig. 12 in that the process in step S119 is performed in place of the process in step S118. Specifically, after setting an initial position for conducting a position search in the target hierarchical image or input image based on the position calculated in the lower level (step S114), CPU 102 extracts a region corresponding to the target hierarchical image or input image and having the same image size as the template image (step S116).

CPU 102 then generates a template image corresponding to a template-generating image, based on the rotation amount for correcting the template image that is calculated in the lower level (step S119). CPU 102 further performs a search process for rotation amount with input of the extracted region and the generated template image (step S120) and generates a corrected template image based on the rotation amount obtained through a search process for rotation amount (step S122). Typically, a corrected template image is generated by correcting the template image. CPU 102 further performs a search process for position with input of the corrected template image generated in step S122 and the extracted region (step S124).

The same process as in Fig. 12 is subsequently performed.

### ≪d5. Modification≫

In the foregoing, the process of recreating the template image that is created in advance has been described. However, a plurality of template images may be generated considering the rotation amount from the template-generating image and be retained in a memory. With such a method, it is only necessary to select the most suitable template image in accordance with the rotation amount acquired on the low level side. As a result, the operation time can be reduced.

When the memory is strictly limited, for example, coarser template images, for example, with 10° pitches may be created rather than fine template images with 1° pitches, and the most closest one may be selected. Even with such a process, a certain effect of improving the accuracy is achieved.

### ≪d6. Advantages≫

In the present embodiment, a template image having almost no relative displacement (relative rotation amount and relative scale) can be used in the hierarchical image on the high resolution side, thereby improving the search accuracy.

### [E. Third Embodiment]

In the foregoing second embodiment, a template image is dynamically generated based on the information of rotation amount detected on the low resolution side. In the second embodiment, after a search process for rotation amount is additionally performed and the template image is corrected, a search process for position is performed. By contrast, in the third embodiment described below, the correction process for the generated template image is omitted. The template image dynamically generated based on the rotation amount calculated on the low resolution side is considered to be adapted to the orientation of object 3 included in the input image. Therefore, even if the rotation correction to such a template image is omitted, relatively high accuracy can be kept.

### ≪e1: Process Overview≫

The overview of the template matching process according to the present embodiment is substantially the same with the one described above with reference to Fig. 3 to Fig. 5. The detailed description is therefore not repeated.

### ≪e2: Increasing Efficiency of Search Process≫

A technique for increasing the process efficiency in the template matching process according to the present embodiment will now be described.

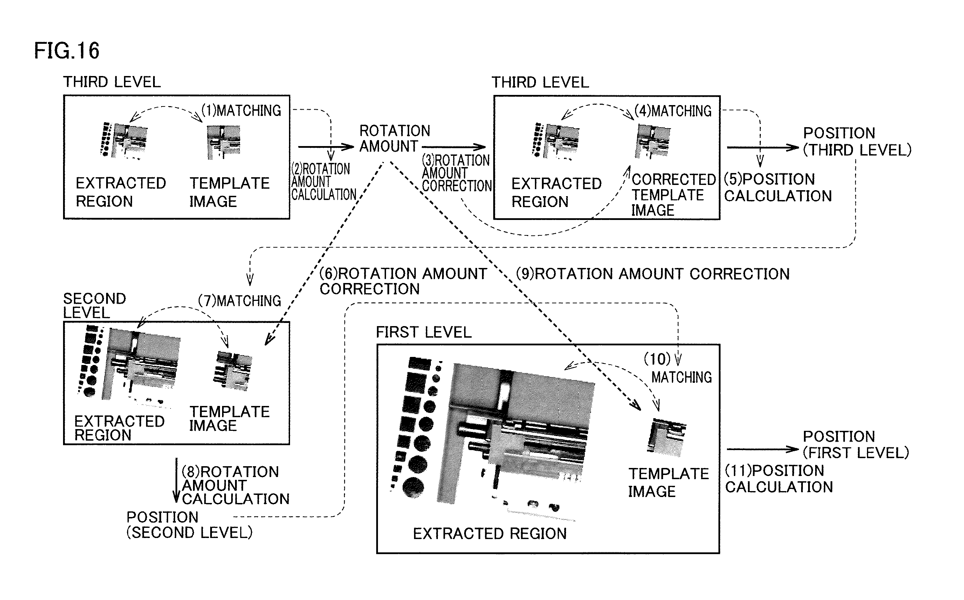

Fig. 16 is a diagram schematically showing the template matching process according to the third embodiment of the present invention. Referring to Fig. 16, first, a search range is set in the third level image, and an extracted region as a target of the matching process is extracted from the search range. A search process for rotation amount is performed between this extracted region and the template image for the third level ((1) matching). As a result of the search process for rotation amount, the relative rotation amount (relative displacement) in the third level between the extracted region and the template image is calculated ((2) rotation amount calculation). The template image is then corrected using the calculated relative rotation amount ((3) rotation amount correction). As a result of this correction, a corrected template image is generated.

A search process for position is then performed between the extracted region and the corrected template image ((4) matching). As a result of this search process for position, the similarity in the third level between the extracted region and the corrected template image is calculated. By repeating the procedure (1) to (4) shown in Fig. 16, the extracted region having the highest similarity to the corrected template image is specified. The position indicating the extracted region having the highest similarity (translation amount indicating the relative position of the extracted region that is the best match with the corrected template image in the search range) is calculated ((5) position calculation). Now the search process in the third level is completed.

A search process in the second level is then started. The search process in the second level uses the relative rotation amount (relative displacement) and the translation amount with respect to the template image, calculated in the third level, for the extracted region having the highest similarity.

Specifically, considering the rotation amount when the similarity indicates the highest value in the third level, a template image is dynamically generated (or recreated) ((6) rotation amount correction). That is, in the template matching process in the second level, a template image corresponding to the second level is generated in accordance with the amount of correction (rotation amount) used for generating the corrected template image corresponding to the third level.

An initial position is set in the second level image based on the calculated translation amount, and an extracted region as a target of the matching process is set based on the initial position. A search process for position is then performed between the extracted region and the template image ((7) matching). As a result of this search process for position, the similarity in the second level between the extracted region and the template image is calculated. By repeating the procedure (7) shown in Fig. 16, the extracted region having the highest similarity to the template image is specified. The position indicating the extracted region having the highest similarity (translation amount indicating the relative position of the extracted region that is the best match with the template image in the search range) is calculated ((8) position calculation). Now the search process in the second level is completed.

A search process in the first level is then started. Specifically, considering the rotation amount when the similarity indicates the highest value in the third level, a template image is dynamically generated (or recreated) ((9) rotation amount correction).

An initial position is set in the first level image based on the translation amount calculated in the second level, and an extracted region as a target of the matching process is set based on the initial position. A search process for position is then performed between the extracted region and the template image ((10) matching). By repeating the procedure (10) shown in Fig. 16, the extracted region having the highest similarity to the template image is specified. The position indicating the extracted region having the highest similarity (translation amount indicating the relative position of the extracted region that is the best match with the template image in the search range) is calculated ((11) position calculation). Now the search process in the first level is completed.

The same search process is subsequently performed for the input image.

As described above, image processing apparatus 100 according to the present embodiment determines the corresponding position in the second level image by searching the second level image for the region corresponding to the template image (the second reference image) corresponding to the second level generated in accordance with the rotation amount (the amount of correction) used for generating the corrected template image (the first corrected reference image) corresponding to the third level.

### ≪e3: Functional Configuration≫

The functional configuration of the image processing apparatus and/or the image processing program according to the present embodiment is the same as in the block diagram shown in Fig. 8. However, the process of generating a template image by template generation unit 154 differs from the process in the first embodiment as described above.

### ≪e4: Process Procedure≫

The overall procedure of the template matching process according to the present embodiment will now be described.

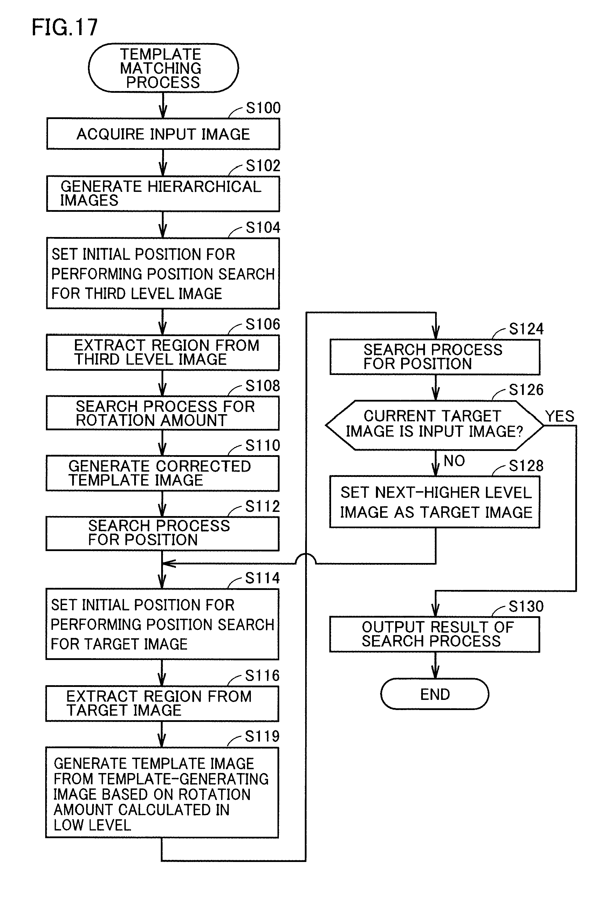

Fig. 17 is a flowchart showing the overall procedure of the template matching process according to the third embodiment of the present invention. The process procedure shown in Fig. 17 differs from the process procedure shown in Fig. 15 in that the processing in steps S120 and S 122 is omitted. The other processing is described above with reference to Fig. 15 and a detailed description is therefore not repeated.

### ≪e5. Modification≫

In the example described above, a search for rotation amount is conducted only in the first level (the lowest resolution). However, a search for rotation amount may be conducted in the other levels, if necessary. For example, even in the highest resolution (that is, the input image), a search process for position may be performed to calculate the translation amount after a search for rotation amount and rotation amount correction to the template image are performed. This enables more robust rotation amount calculation and translation amount calculation.

A search for rotation amount and rotation amount correction to the template image may be performed not only in the lowest resolution and the highest resolution but in some of intermediate levels.

After all it is the matter of trade-off between the accuracy stability and the operation speed and therefore these matters may be designed appropriately depending on usages and needs.

### ≪e6. Advantages≫

The present embodiment can eliminate the operation for calculating a relative displacement (relative rotation amount and relative scale) in the hierarchical image on the high resolution side, thereby increasing the speed of processing.

### [F. Fourth Embodiment]

In the foregoing first to third embodiments, an example in which a template matching process is performed in accordance with a predetermined procedure has been described. By contrast, in the fourth embodiment described below, the matching method on the high resolution side is optimized depending on the degree of matching in the template matching process on the low resolution side.

### ≪f1. Overview≫

The "degree of matching" is an index indicating how similar the input image or the hierarchical image is, relative to the template image, and, for example, a correlation value is used. As shown in Fig. 11, in POC, the magnitude of correlation peak (peak value) obtained after inverse Fourier transform can be used.

In the present embodiment, there are two kinds of similarity: similarity obtained when calculating the rotation amount for rotating and correcting a template image (the process result by POC process 164 in Fig. 10); and similarity obtained when conducting a search for position and calculating a translation amount (the process result by POC process 166 in Fig. 10). For convenience of explanation, in the following, the former is referred to as "rotation similarity" and the latter is referred to as "position displacement similarity".

### ≪f2. Pattern Examples≫

Pattern examples for optimizing the matching method based on the similarity on the low resolution side include the following.

### <Pattern 1>

(1) Low resolution side: rotation search + rotation amount correction + position search → position displacement similarity: high → high resolution side: template image generation based on the rotation amount on the low resolution side + position search
(2) Low resolution side: rotation search + rotation amount correction + position search → position displacement similarity: low → high resolution side: template image generation based on the rotation amount on the low resolution side + rotation search + rotation amount correction + position search

### <Pattern 2>

(1) Low resolution side: rotation search + rotation amount correction + position search → rotation similarity: high → high resolution side: template image generation based on the rotation amount on the low resolution side + position search
(2) Low resolution side: rotation search + rotation amount correction + position search →rotation similarity: low → high resolution side: template image generation based on the rotation amount on the low resolution side + rotation search + rotation amount correction + position search

In patterns 1 and 2 above, when the similarity is high, a search for the rotation amount relative to the template image and rotation amount correction are omitted on the high resolution side.

Alternatively, the following patterns may be employed.

### <Pattern 3>

(1) Low resolution side: rotation search + rotation amount correction + position search → position displacement similarity: high → high resolution side: template image generation based on the rotation amount on the low resolution side + rotation search (with limitation on a search range based on the rotation amount on the low resolution side) + rotation amount correction + position search
(2) Low resolution side: rotation search + rotation amount correction + position search → position displacement similarity: low → high resolution side: template image generation based on the rotation amount on the low resolution side + rotation search (without limitation on a search range based on the rotation amount on the low resolution side) + rotation amount correction + position search

### <Pattern 4>

(1) Low resolution side: rotation search + rotation amount correction + position search → rotation similarity: high → high resolution side: template image generation based on the rotation amount on the low resolution side + rotation search (with limitation on a search range based on the rotation amount on the low resolution side) + rotation amount correction + position search
(2) Low resolution side: rotation search + rotation amount correction + position search → rotation similarity: low → high resolution side: template image generation based on the rotation amount on the low resolution side + rotation search (without limitation on a search range based on the rotation amount on the low resolution side) + rotation amount correction + position search

In patterns 3 and 4 above, if similarity is high, limitation on a search range is validated in a search for the rotation amount relative to the template image on the high resolution side, and if not, a search range is not limited.

As described above, image processing apparatus 100 according to the present embodiment includes the function (control unit) of differentiating the procedure of generating a template image or a corrected template image for use in a search process on the high resolution side, based on at least one of the similarity (rotation amount similarity) calculated in the rotation amount correction to the template image on the low resolution side and the similarity (position displacement similarity) calculated in a search for position on the low resolution side. That is, the control unit of image processing apparatus 100 changes the method of determining the corresponding position in the second resolution by the second corresponding position determining unit, based on at least one of the similarity calculated in a search process between the first input image and the first reference image and the similarity calculated in a search process between the first input image and the first corrected reference image. More specifically, image processing apparatus 100 differentiates the generating procedure based on the similarity calculated when determining at least one of a relative displacement and a position displacement.

### ≪f3. Modifications≫

In the foregoing, rotation amount similarity and position displacement similarity have been mentioned. However, any other similarities, for example, such as scale similarity may also be employed in the same manner. In this case, for example, a matching method on the high resolution side may be determined depending on the weighted average value of the three similarities.

### ≪f4. Advantages≫

The accuracy stability and the shorter operation time both can be achieved by optimizing the matching method on the high resolution side in accordance with the degree of matching on the low resolution side. For example, if probable matching is achieved on the low resolution side, it can be assumed that the translation amount can be calculated with high accuracy even without performing a search for rotation amount on the high resolution side and, therefore, the rotation amount search process can be omitted. The total operation volume thus can be reduced.

### [G. Other Embodiments]

In the foregoing embodiments, the RIPOC method is used as a method of calculating and correcting a relative displacement (geometric displacement) between the input image/hierarchical image (partial image included therein) and the template image, by way of example. Additionally or alternatively, a variety of algorithms for calculating and correcting a geometric displacement including a scale (size) can be employed. For example, a matching method using Fourier Mellin transforms disclosed in NPD 1 above may be employed. With this matching method using Fourier Mellin transforms, a scale (size) search process can be performed in the same manner as the rotation amount search process described above.

Examples of the matching algorithms using frequency information in image, other than POC, include a method described in Document 1 (Hitoshi KIYA, "Integration of Image Signal Processing and Image Pattern Recognition - DCT Sign Only Correlation and Its Application", Tokyo Metropolitan University, Faculty of System Design, JSPE Workshop on Dynamic Image Processing for Real Application, 2007 (2007.3.8)).

### [H. Other Modes]

Embodiments of the present invention include the mode as follows.

An image processing apparatus according to another embodiment is directed to a template matching method in consideration of a relative rotation amount or a relative scale, or both, between a template image and an acquired image. The image processing apparatus includes an image acquisition unit for acquiring an image, a unit for acquiring a template image, a unit for searching the acquired image for a corresponding position, using correlation between a partial region of the acquired image and the template image, a relative displacement calculation unit for calculating a relative rotation amount or scale, or both, with respect to the template image during the search, and a unit for calculating the corresponding position after correcting the relative displacement between the acquired image and the template image, using the value calculated by the relative displacement calculation unit. The image processing apparatus 100 further includes a resolution conversion unit for converting the image acquired by the image acquisition unit into a plurality of resolutions, a unit for acquiring a template image for each resolution, a unit for specifying, from a low resolution image, a provisional position in the low resolution image using the template image, a unit for setting a temporary position in a high resolution from the provisional position obtained in each resolution, a unit for determining a corresponding position in the acquired image by successively specifying a provisional position from low resolution to high resolution, and a unit for limiting a search range for a relative displacement in the high resolution based on a relative displacement obtained in the low resolution.

With the image processing apparatus according to this aspect, images are multiplexed and a search is conducted from the low resolution side while narrowing down both of the relative displacement and the position, thereby reducing the operation speed and improving robustness of accuracy.

An image processing apparatus according to another embodiment is directed to a template matching method in consideration of a relative rotation amount or a relative scale, or both, between a template image and an acquired image. The image processing apparatus includes an image acquisition unit for acquiring an image, a unit for acquiring a template image, a unit for searching the acquired image for a corresponding position using correlation between a partial region of the acquired image and the template image, a relative displacement calculation unit for calculating a relative rotation amount or scale, or both, with respect to the template image during the search, and a unit for calculating the corresponding position after correcting a relative displacement between the acquired image and the template image, using the value calculated by the relative displacement calculation unit. The image processing apparatus 100 further includes a resolution conversion unit for converting the image acquired by the image acquisition unit into a plurality of resolutions, a unit for acquiring a template image for each resolution, a unit for specifying, from a low resolution image, a provisional position in the low resolution image using the template image, a unit for setting a temporary position in a high resolution from the provisional position obtained in each resolution, and a unit for determining a corresponding position in the acquired image by successively specifying a provisional position from low resolution to high resolution, a unit for using, as a template image, an image region in which the template image used in template matching in the high resolution is displaced to the same degree as the relative displacement obtained in the low resolution.

The image processing apparatus according to this aspect uses a template with a relatively little relative displacement of rotation or scale in the hierarchical image of high resolution, thereby improving the accuracy.

In the template matching process in high resolution, the image processing apparatus only calculates a position displacement after correcting a relative displacement between the image in high resolution and the template, based on the relative displacement obtained in low resolution.

The image processing apparatus according to this aspect does not perform operation for obtaining a relative displacement of rotation or scale in a high-resolution hierarchical image, thereby achieving fast processing.

The image processing apparatus controls the amount of limiting a calculation range when calculating a relative rotation amount or a relative scale, or both, during matching at high resolution, based on the similarity calculated in a template matching process in low resolution.

In the image processing apparatus according to this aspect, the similarity is a similarity obtained when at least any one of a relative rotation amount, a relative scale, or a position displacement is calculated.

The embodiment disclosed here should be understood as being illustrative rather than being limitative in all respects. The scope of the present invention is shown not in the foregoing description but in the claims, and it is intended that all modifications that come within the meaning and range of equivalence to the claims are embraced here.

### REFERENCE SIGNS LIST

1 system, 2 belt conveyor, 3 object, 4 camera, 5 template image, 100 image processing apparatus, 102 CPU, 104 RAM, 106 ROM, 108 network interface, 110 auxiliary storage device, 112 template matching process program, 114 template-generating image, 120 display unit, 122 input unit, 124 memory card interface, 126 memory card, 128 camera interface, 130 bus, 150 image acquisition unit, 152 multi-resolution image generation unit, 154 template generation unit, 156 search control unit, 158 position detection unit, 161, 171 Fourier transform process, 162, 172 logarithmizing process, 163, 173 polar coordinate transform process, 164, 166 POC process, 165 rotation amount correction process.

## Claims

1. An image processing apparatus for searching an input image for a region corresponding to a reference image, comprising:
an input image acquisition unit configured to acquire at least first and second input images corresponding to the input image and having a first resolution and a second resolution higher than the first resolution, respectively;
a reference image acquisition unit configured to acquire first and second reference images corresponding to the reference image and having resolutions corresponding to the first and second resolutions, respectively;
a first corresponding position determining unit configured to calculate a relative displacement of rotation and/or scale between the first input image and the first reference image through a search process between the first input image and the first reference image, correct the first reference image based on the calculated relative displacement to generate a first corrected reference image, and determine a corresponding position in the first resolution through a search process between the first input image and the first corrected reference image; and
a second corresponding position determining unit configured to determine a corresponding position in the second resolution by performing a search process between the second input image and the second reference image, using the relative displacement calculated by the first corresponding position determining unit, with reference to a position in the second input image that is equivalent to the corresponding position in the first resolution.

2. The image processing apparatus according to claim 1, wherein the second corresponding position determining unit calculates a relative displacement of rotation and/or scale between the second input image and the second reference image by performing a search process between the second input image and the second reference image with limitation on a search range in accordance with the relative displacement between the first input image and the first reference image, corrects the second reference image based on the calculated relative displacement to generate a second corrected reference image, and determines a corresponding position in the second resolution through a search process between the second input image and the second corrected reference image.

3. The image processing apparatus according to claim 2, wherein the second corresponding position determining unit allows the reference image acquisition unit to generate the second reference image in accordance with the relative displacement between the first input image and the first reference image.

4. The image processing apparatus according to claim 3, wherein the second corresponding position determining unit calculates the relative displacement of rotation and/or scale between the second input image and the second reference image by performing a search process between the second input image and the second reference image, corrects the second reference image based on the calculated relative displacement to generate the second corrected reference image, and determines a corresponding position in the second resolution through the search process between the second input image and the second corrected reference image.

5. The image processing apparatus according to any one of claims 1 to 4, further comprising a control unit configured to change a method of determining a corresponding position in the second resolution by the second corresponding position determining unit, based on at least one of: similarity calculated in the search process between the first input image and the first reference image; and similarity calculated in the search process between the first input image and the first corrected reference image.

6. An image processing method for searching an input image for a region corresponding to a reference image, comprising the steps of:
acquiring at least first and second input images corresponding to the input image and having a first resolution and a second resolution higher than the first resolution, respectively;
acquiring first and second reference images corresponding to the reference image and having resolutions corresponding to the first and second resolutions, respectively;
calculating a relative displacement of rotation and/or scale between the first input image and the first reference image through a search process between the first input image and the first reference image, correcting the first reference image based on the calculated relative displacement to generate a first corrected reference image, and determining a corresponding position in the first resolution through a search process between the first input image and the first corrected reference image; and
determining a corresponding position in the second resolution by performing a search process between the second input image and the second reference image, using the relative displacement, with reference to a position in the second input image that is equivalent to the corresponding position in the first resolution.

7. An image processing program for searching an input image for a region corresponding to a reference image, the image processing program causing a computer to perform the steps of:
acquiring at least first and second input images corresponding to the input image and having a first resolution and a second resolution higher than the first resolution, respectively;
acquiring first and second reference images corresponding to the reference image and having resolutions corresponding to the first and second resolutions, respectively;
calculating a relative displacement of rotation and/or scale between the first input image and the first reference image through a search process between the first input image and the first reference image, correcting the first reference image based on the calculated relative displacement to generate a first corrected reference image, and determining a corresponding position in the first resolution through a search process between the first input image and the first corrected reference image; and
determining a corresponding position in the second resolution by performing a search process between the second input image and the second reference image, using the relative displacement, with reference to a position in the second input image that is equivalent to the corresponding position in the first resolution.
